# EUROPEAN PATENT APPLICATION

(11) **EP 4 707 323 A1**
(43) Date of publication of application: **11.03.2026**
(21) Application number: 23732170.8
(22) Date of filing: 03.05.2023
(51) Int. Cl.: C08J 5/18, C08J 7/18, B05D 3/06, B29C 59/04, B32B 27/12, B32B 27/16, B32B 27/36, B32B 38/06, B44C 1/17, C09J 5/06, B32B 27/10, C08J 3/24

(54) **METHOD OF MANUFACTURING A VARNISH TRANSFER FOIL**

(71) Applicant: TRANSFORMAD, SAU, 08420 Granollers Barcelona (ES)
(72) Inventor: MENÉNDEZ CLARET, Carles, 08420 Granollers (Barcelona) (ES)
(74) Representative: Sahuquillo Huerta, Jesús
(86) International application number: PCT/ES2023/070278
(87) International publication number: WO 2024/227960

(57) **Abstract**

A method of manufacturing a transfer varnish transfer foil comprising: (A) a first stage of providing a foil giving a surface finish on which to apply a layer of transferable varnish, (B) a second stage of applying a layer or layers of a resin or resins on a face with the desired surface finish of the by-product obtained in the previous stage, wherein at least one resin contains radiation curable functional groups and a thermal polymerisation initiator, (C) a third stage of partial radiation curing of the foil resulting from the previous stage, and (D) a fourth stage of calendering or pressing the foil resulting from the previous stage by applying pressure and temperature, to generate a given surface finish, while curing the resin using the thermal polymerisation initiator provided in the second stage together with the resin.

## Description

### TECHNICAL FIELD

The present invention relates to a method of manufacturing a foil for transferring a layer of varnish onto a substrate containing melamine resin.

### STATE OF THE ART

The prior art describes in various ways treated PET (polyethylene terephthalate) foils, for example with respect to adhesive tapes as taught in DE 10 2004 058281 A1. Furthermore, by EP 2 920 232 B1 treated PET foils are known which are used for bonding a multilayer coating to wooden substrates to form, for example, laminated flooring panels. While the PET film forms part of the multi-layer structure of the laminate in these situations, the PET film can also be used to transfer a coating to the substrate by means of a press, where the backing film is subsequently removed. To achieve an anti-fingerprint effect, the PET film is designed with a rough surface facing the substrate, so that the laminate produced exhibits a rough, matt, non-reflective surface. The surface of a PET carrier sheet facing the press is left untreated, i.e. smooth and even.

For example, WO2022/058033A1 describes a carrier film for transferring a coating to a melamine resin film on a substrate. The carrier film comprises a foil, which may comprise any suitable plastic, e.g., PET. The film comprises a bottom surface with a surface roughness Rz of 0.1 pm to 100 pm according to ISO 4287 and preferably a surface roughness RSm of 0.1-1000 pm, more preferably 0.5-500 pm, even more preferably 5-100 pm according to ISO 4287 and also a top foil surface with a surface roughness Rz of 0.1 pm up to 100 pm according to ISO 4287 and preferably a surface roughness RSm of 0.1-1000 pm, more preferably 0.5-500 pm, even more preferably 5-100 pm according to ISO 4287. It is not necessary that both surfaces have the same roughness. Top and bottom refer to the position of the surfaces when imaged in a press, where the bottom surface faces the substrate, and the top surface faces the press. In comparison to the prior art, where only one of the film surfaces has a roughness as described above, the roughness of the upper surface of the film allows the air between the press and the carrier film to be expelled from the press. Thus, no bubbles can form and cause dents in the produced laminate. Furthermore, no press profile, which would be rougher than the surface roughness of the film, is necessary to achieve this result. Thus, the described carrier film enables the production of laminates with the desired roughness, which leads to an anti-fingerprint effect, regardless of a possibly inhomogeneous substrate density.

However, to provide the technical performance required for the transfer described in this document, relatively high lacquer thicknesses tend to be applied, which creates a major handling problem because the lacquers become stiff and shrink during the curing process. These properties make it difficult to keep them flat when handled, and can even lead to lacquer flaking, which can in turn lead to defects if not properly removed and pressed. This technical problem is solved by the process described in the accompanying claims.

### EXPLANATION OF THE INVENTION

The present invention concerns a process for the manufacture of a transfer foil configured to transfer a varnish (transfer foil). The process according to the present invention makes it possible to advantageously improve the flatness of the transfer foil, while increasing its flexibility, improving its handling, and preventing it from becoming detached during handling or cutting processes. This facilitates its use in industrial processes and reduces waste. These objects are achieved by the method according to claim 1. Particular, and/or preferred embodiments of the method according to the present invention are described in the dependent claims.

The method of manufacturing a foil for transferring a varnish, according to the invention, comprises:
a first stage of providing a foil that gives a surface finish on which to apply a layer of transferable varnish,
a second stage of applying one or more layers of a resin or resins on one side with the desired surface finish of the by-product obtained in the previous stage, wherein at least one resin contains radiation curable functional groups and a thermal polymerisation initiator,
a third stage of partial radiation curing of the foil resulting from the previous stage, and
a fourth stage of calendering or pressing the foil resulting from the previous stage by applying pressure and temperature, to generate a certain surface finish, while at the same time curing the resin by means of the thermal polymerisation initiator provided in the second stage together with the resin.

In a preferred embodiment of the invention, the execution of the method is sequential, in the order indicated. However, in a non-limiting manner, there may be additional intermediate steps or duplication and/or repetition of steps.

On the other hand, in the present invention a distinction is made between "drying" and "curing" of resin, which can in no way be considered as technical equivalents. In a drying process a solvent is extracted by evaporation, whereas in curing a polymerisation reaction takes place. Thus, according to the present invention, the radiation curing process, in a non-limiting way, encompasses both ultraviolet (UV) radiation processes and means, as well as electron beam radiation processes and means, since both techniques, well known to those skilled in the art, are sources of radiant energy. In short, in the present invention, radiation curable resins are to be understood as all those resins that polymerise when exposed to a source of radiation such as, for example, a source of UV radiation, or a source of electron beam radiation.

Throughout the description and the claims, the word "comprises", and variants thereof are not intended to exclude other technical features, additives, components, or steps. To those skilled in the art, other objects, advantages, and features of the invention will be apparent in part from the invention and in part from the practice of the invention. The following examples and drawings are provided by way of illustration and are not intended to restrict the present invention. Furthermore, the invention covers all possible combinations of particular and preferred embodiments indicated herein.

### PREFERRED EMBODIMENTS OF THE INVENTION AND EXAMPLES

As previously indicated, the present invention consists of a method of manufacturing a foil for transferring a varnish, comprising, in turn:
a first stage of providing a foil that gives a surface finish on which to apply a layer of transferable varnish,
a second stage of applying one or more layers of a resin or resins on one side with the desired surface finish of the by-product obtained in the previous stage, wherein at least one resin contains radiation curable functional groups and a thermal polymerisation initiator,
a third stage of partial radiation curing of the foil resulting from the previous stage, and
a fourth stage of calendering or pressing the foil resulting from the previous stage by applying pressure and temperature, to generate a certain surface finish, while at the same time curing the resin by means of the thermal polymerisation initiator provided in the second stage together with the resin.

In the following, some examples are described which illustrate non-limiting practical realisations of the invention. Specifically, it is indicated how each of the stages of the manufacturing method can be implemented in practice. As indicated, these embodiments are practical examples that can be combined with each other. At the same time, all percentages and grammages of the resins in the following examples refer to the dry content of the resins.

### A first stage of providing a foil that gives a surface finish on which to apply a layer of transferable varnish;

The surface finish is not limited to a uniform gloss or matt and may also have any other effect such as relief, any texture, geometric figures, combinations of the above or any other finish or weave that we wish to reproduce. In a first non-limiting practical embodiment, a polyethylene terephthalate (PET) foil of between 10 µm and 300 µm thickness is provided, more preferably between 30 µm and 150 µm, in particular between 30 µm and 100 µm to which a layer of an excimer-cured matt varnish (an excited dimer) has been previously applied on one of its sides, having a matt anti-fingerprint structure that will subsequently be reproduced on the final product.

In a second non-limiting practical embodiment of the first stage of the process, a biaxially oriented paraffinic thermoplastic resin film, in particular BOPP between 10 µm and 300 µm thick, preferably between 30 µm and 200 µm, in particular between 50 µm and 125 µm, to which the side where the varnish is applied has been previously embossed, so that it has a wood imitation structure which will subsequently be reproduced in the final product.

In a third non-limiting practical embodiment, a polyethylene terephthalate (PET) foil of between 10 µm and 300 µm thickness is provided, more preferably between 30 µm and 150 µm, and more preferably between 30 µm and 100 µm. This foil has the side on which the second stage is to be applied with a gloss finish.
*a second stage of applying one or more layers of a resin or resins to the desired surface finish face of the by-product obtained in the previous stage, wherein at least one resin contains radiation curable functional groups and a thermal polymerisation initiator;*
In this second stage, one or more layers of a resin or resins (i.e. may be a single type of resin or several types of layered resins) where at least one contains radiation curable functional groups and a thermal polymerisation initiator and may be further cured by - but is not limited to - exposure to moisture, oxidation, thermal mechanisms, two-component resin polymerisation, blocked isocyanate polymerisation or other non-UV or electron beam radiation, with a thickness between 10 µm and 300 µm.

The resin(s) used in this second stage may contain - but is not limited to - a mixture of oligomers, monomers, additives with functionalities suitable to obtain covalent interfacial cross-linking with the adjacent layer, as well as fillers to improve mechanical resistance to scratching and abrasion, nanoparticles, short fibres, pigments, rheological behaviour modifiers, wetting agents, surface tension modifiers, solar radiation protection additives, antioxidants, anti-vandalism additives (e.g. anti-graffiti), antifouling additives, anti-microbial additives, flame retardant additives, infrared radiation reflecting additives, anti-static additives, anti-fingerprint additives or any possible combination of the above.

In a particular embodiment, the radiation curable components have been selected from the group of unsaturated acrylates and methacrylates, In another particular preferred embodiment said radiation curable components are composed of an epoxy acrylate oligomer, preferably a polyester acrylate oligomer, and in particular a urethane acrylate oligomer or the corresponding methacrylate oligomers as prepolymers capable of radiation polymerisation, and if appropriate diluted with mono and/or polyfunctional monomers acrylates and/or their corresponding methacrylates. In another embodiment to increase colour stability upon exposure to ultraviolet radiation, the prepolymer is an aliphatic urethane acrylate oligomer, which has been suitably diluted with a 1-6 hexanediol diacrylate (HDDA) monomer.

In another embodiment the thermal polymerisation initiator is from the group of organic peroxides. In another embodiment, to have a suitable initiation temperature range, the thermal polymerisation initiator is tert-butyl-peroxybenzoate. In another embodiment the thermal polymerisation initiator has been selected from the AZO group.
*a third stage of partial radiation curing of the foil resulting from the previous stage;*
Next, the process of the invention aims to partially cure the by-product obtained from the execution of the first and second stages, with the objective of obtaining a cure such as to allow even winding of the foil if necessary and, in turn, to ensure chemical anchorage points and reactivity for connecting adjacent layers of coating.

The curing method is selected from, but not limited to, electron beam curing, ultraviolet radiation curing, thermal polymerisation initiator curing, moisture exposure curing, oxidative curing, thermal curing, or a combination of any of the above.

Preferably, the foil resulting from the above steps is cured by electron beam and/or ultraviolet radiation, and more preferably by electron beam (E.B.) curing. In both cases it can be further cured - in a non-limiting way - by exposure to moisture, oxidation, thermal mechanisms, two-component resin polymerisation, polymerisation of free and/or blocked isocyanate, to obtain interconnection by cross-linking of all the layers guaranteeing interfacial adhesion.

The problem of tubing shrinkage (curling) is one of the biggest problems in this type of product and occurs when one layer of the film shrinks differently from another, generating tensions that cause the film to become unbalanced. This shrinkage occurs during drying and/or curing, and the degree of shrinkage depends mainly on the resins used and the degree of polymerisation given.

In a particular embodiment, curing is carried out by electron beam. In this realisation, despite the use of resins with a high cross-linking density that could have the disadvantage of having a high shrinkage, this is minimised thanks to the process of the invention, since, by carrying out this partial curing, the resin shrinks less, and in turn, as it is less cross-linked, it behaves in a more flexible way, adapting better to the shape of the surfaces to which we want to adhere it. This flexibility also means that the resin does not "crackle" and detach from the foil.

The resulting varnish layer is sufficiently cured to be able to be wound, but at the same time it has not become as stiff and has not contracted in the same way as it would have done if a full cure had been carried out.

There are many combinations, since several layers could be applied, and partial curing could be done in one or several times, on one or several of these layers, but the concept would be the same, to be able to produce a foil containing a transfer varnish, in which one or several layers of lacquer are not fully cured, in order to improve flatness and prevent it from coming off during handling.
*a fourth stage of calendering or pressing the foil resulting from the previous stage by applying pressure and temperature, to generate a certain surface finish, while at the same time curing the resin by means of the thermal polymerisation initiator provided in the second stage together with the resin;*
In a particular embodiment, the finished product is successively placed with the side on which the second stage has been applied towards the inside, on a sheet of paper impregnated with melamine resin which in turn is on top of a stack of sheets of Kraft paper impregnated with phenol-formaldehyde resin and pressed at a temperature of 160°C and pressure of 80 kg/cm2, for 20 minutes.

In a particular embodiment, a finishing plate with a relief is used in the press, so that this relief is added to that of the first-stage foil, so that the surface finish is a combination of that of the first-stage foil and that of the finishing plate in the press.

In addition to the essential features indicated above, it is possible to incorporate in the method of the invention, the following additional steps.
*an optional step of applying one or more layers of resin(s) of adhesion promoting resin(s) and*/*or adhesive;*
Optionally, the process of the invention comprises after the second and/or after the third stage applying one or more layers of adhesion-promoting resin(s) and/or adhesive on the face where the second stage is applied, subsequently undergoing, if necessary, a drying and/or curing stage selected - in a non-limiting manner - from among: ultraviolet radiation curing, electron beam radiation curing, thermal polymerisation initiator curing, moisture exposure curing, oxidative curing, physical water drying, solvent removal drying or a combination of any of the above.

In a particular embodiment, a water-based resin with physical drying and/or radiation curing is used to produce HPL. The contribution of this adhesive resin is between 1 and 50 g/m2, preferably between 2 g/m2 and 40 g/m2, more preferably between 10 g/m2 and 30 g/m2, considering the weight referred to the resin as it is with its water content.
*an optional step of applying one or more layers of resin(s) on the opposite side to the one applied in the second step.*

Due to the fact that the varnish layer is not fully cured, it may have a rubberier behaviour. To prevent sticking during the rewinding process, it may be advisable to apply a layer of varnish on the outer side of the foil to help reduce adhesion during winding (the outer side is the contact side during rewinding). This allows us to do a lower partial cure without the risk of sticking together. This additional layer, in turn, can contain additives that help to increase electrical conductivity to prevent static charges from building up (antistatic effect), which helps to prevent dust from being attracted to the foil, reducing contamination during the fourth stage process.

In one embodiment, a layer of resin is applied which provides a roughness such as to reduce the contact surface between layers, helping to reduce adhesion between layers when winding. In another embodiment, the resin contains release additives, which reduce this undesirable effect.

### Example 1

We take a 50um PET that has been previously treated so that one side has a particular matt anti-fingerprint finish by using excimer lamps. On this treated side, we apply 50um of an acrylic varnish composed of urethane acrylate resin and diluted with HDDA monomer to an application viscosity of 2000 mPa-s at 25°C and measured at a shear rate of 1000 s-1, to which we have added 1% peroxide, and we partially cure this foil by electron beam, applying a voltage of 200kV with a low dose of 3kGy.

We then apply an additional layer to promote adhesion to the substrate using a physically drying resin. The product undergoes a drying process and is then placed with the side on which the second stage has been applied facing inwards, on a sheet of paper impregnated with melamine resin, which in turn is placed on top of a stack of sheets of Kraft paper impregnated with phenol-formaldehyde resin and pressed at a temperature of 160°C and pressure of 80 kg/cm2, for 20 minutes.

### Example 2

We take a 50um PET that has been previously treated so that one side has a particular finish. On this treated side, we apply 50um of an acrylic varnish with high scratch resistance, to which we have added 1% peroxide. Before curing, we apply a second layer of 15um of adhesion promoter, also acrylic, to which we also add 1% peroxide and in turn add acrylated melamine. The foil is cured by electron beam, applying a low dose of 3kGy with a voltage of 200kV, and the foil is coiled with the varnish. Finally, we press as in example 1.

### Example 3

We take a 50um PET that has been previously treated so that one side has a particular finish. On this treated side, we apply 50um of an acrylic varnish, to which we have added 1% peroxide. Prior to curing, it is laminated on another 50um PET, to which we have applied (and dried) a physical drying varnish with acrylic groups still to be reacted and which in turn contains peroxide. Then, we cure this set of foils using an electron beam, curing with a voltage of 250kV and a low dose of 4kGy, and before winding it, we detach the second PET, so that the varnish it contained has remained adhered to the other one.

The finished product is placed with the side on which the second stage has been applied towards the inside, on a sheet of paper impregnated with melamine resin, which in turn is placed on a chipboard and pressed at a temperature of 180°C and a pressure of 40 kg/cm2 for 40 seconds.

### Example 4

We take a 50um PET film that has been previously treated so that one side has a particular finish. On this treated side, we apply 50um of an acrylic varnish, to which we have added 1% peroxide, and we cure the film using an electron beam, applying a low dose of 5kGy with a voltage of 200kV.

We then applied an additional 15um layer to promote adhesion to the substrate using a radiation curing resin, to which we added additives to promote adhesion, as well as a thermal polymerisation initiator. Finally, we cured again with a low dose of 5kGy, but this time at a voltage of 150kV.

### Example 5

We take a 50um PET that has been previously treated so that one side has a particular finish. On the other side, we apply a layer of varnish to give us a structure that helps us to reduce adhesion. On the first treated side, we apply 50um of an acrylic varnish, to which we have added 1% peroxide, and we cure the foil using an electron beam, applying a voltage of 200kV and a low dose of 4kGy. We then applied an additional layer to promote adhesion to the substrate using a physically curing resin. Finally, we press as in example 1.

### Example 6

We take a 50um PET that has been previously treated so that one side has a particular finish. On the other side, we apply a layer of varnish that provides us with a structure that helps us to reduce adherence and contains antistatic additives. On the first treated side, we apply 50um of an acrylic varnish, to which we have added 1% peroxide, and we cure the film by electron beam, applying a voltage of 200kV and a low dose of 4kGy. We then applied an additional layer to promote adhesion to the substrate using a physically curing resin. Finally, we press as in example 1.

### Example 7

We take a 50um PET with a glossy finish on one side. On this glossy side, we apply 50um of an acrylic varnish with high scratch resistance, to which we have added 1% peroxide. Before curing, we apply a second layer of 15um of adhesion promoter, also acrylic, to which we also add 1% peroxide and in turn we add acrylated melamine. The foil is cured by electron beam, applying a low dose of 3kGy with a voltage of 200kV, and the foil is coiled with the varnish. Finally, we press as in example 1, obtaining a high gloss surface.

## Claims

1. A method of manufacturing a foil for transferring a varnish comprising:
a first stage of providing a foil that gives a surface finish on which to apply a layer of transferable varnish,
a second stage of applying one or more layers of a resin or resins on one side with the desired surface finish of the by-product obtained in the previous stage, wherein at least one resin contains radiation curable functional groups and a thermal polymerisation initiator, a third stage of partial radiation curing of the foil resulting from the previous stage, and
a fourth stage of calendering or pressing the foil resulting from the previous stage by applying pressure and temperature, to generate a certain surface finish, while at the same time curing the resin by means of the thermal polymerisation initiator provided in the second stage together with the resin.

2. The method according to claim 1, wherein the first stage foil is a PET foil, preferably between 10-150um, and more preferably between 50-100um.

3. The method according to claim 1, wherein the first stage foil is composed of biaxially oriented paraffinic thermoplastic resin, in particular BOPP, preferably between 10 µm and 300 µm thick, more preferably comprised between 30 µm and 200 µm.

4. The method according to any one of the preceding claims, wherein the first stage foil has a matt finish, which has been produced by applying a microstructure by excimer curing.

5. The method according to any one of the preceding claims, wherein the foil of the first stage has previously been embossed on the side where the varnish is now applied.

6. The method according to any one of the preceding claims, wherein additionally a varnish has been applied to the other side of the first stage foil to reduce adhesion in case there is a winding process after the third stage, thus preventing the partially cured material from adhering to each other.

7. The method according to claim 6 wherein the additional varnish layer has antistatic properties.

8. The method according to any one of the preceding claims, comprising an additional step of applying one or more layers of additional adhesion promoting resin(s) and/or adhesive, applicable between the second and third partial radiation curing step or between the third and fourth calendering or pressing step.
